# EUROPÄISCHE PATENTSCHRIFT

(11) **EP 3 360 741 B1**
(45) Veröffentlichungstag und Bekanntmachung des Hinweises auf die Patenterteilung: **05.03.2025**
(21) Anmeldenummer: 18152016.4
(22) Anmeldetag: 17.01.2018
(51) Int. Cl.: B60W 10/00, B60W 10/04, B60W 10/18, B60W 20/00, B60W 30/045, B60W 30/18, B60W 50/14, B60W 50/00, G05D 1/00

(54) **VERFAHREN ZUM BETREIBEN EINES FAHRZEUGS, INSBESONDERE EINES NUTZFAHRZEUGS**
METHOD FOR OPERATING A VEHICLE, IN PARTICULAR A COMMERCIAL VEHICLE
PROCÉDÉ DE FONCTIONNEMENT D'UN VÉHICULE, EN PARTICULIER UN VÉHICULE UTILITAIRE

(30) Priorität: 24.01.2017 DE 102017000608
(43) Veröffentlichungstag der Anmeldung: 15.08.2018
(73) Patentinhaber: MAN Truck & Bus SE, 80995 München (DE)
(72) Erfinder: Grimm, Thomas, 80339 München (DE)
(74) Vertreter: Liebl, Thomas

(56) Entgegenhaltungen:
- EP-A1- 2 953 110
- DE-A1- 102009 033 752
- DE-A1- 102011 112 990
- DE-A1- 19 648 943
- DE-B3- 102012 024 859
- US-A- 4 335 429
- US-A1- 2015 375 756
- US-A1- 2016 018 821

## Beschreibung

Die Erfindung betrifft ein Verfahren zum Betreiben eines Fahrzeugs, insbesondere eines Nutzfahrzeugs, nach Patentanspruch 1, ein System zum Betreiben eines Fahrzeugs, insbesondere eines Nutzfahrzeugs, nach Patentanspruch 13 sowie ein Fahrzeug, insbesondere ein Nutzfahrzeug, zur Durchführung des Verfahrens nach Patentanspruch 14.

Es ist bekannt, an einem Fahrzeug ein System vorzusehen, mittels dem der Fahrzeugbetrieb durch Berücksichtigung von in Fahrtrichtung vor dem Fahrzeug befindlichen Änderungen der Fahrbahnsteigung optimiert werden kann. Der Fahrbetrieb wird dabei zur Verringerung des Kraftstoffverbrauchs bzw. des Energieverbrauchs des Fahrzeugs optimiert.

Beispielsweise ist aus der DE 10 2010 048 323 A1 ein Betriebsverfahren für ein Kraftfahrzeug bekannt, bei dem zunächst wenigstens eine verbrauchsrelevante Straßeneigenschaft einer Straße auf der bevorstehenden Fahrroute des Kraftfahrzeugs ermittelt und anschließend eine Fahrempfehlung in Abhängigkeit von der ermittelten verbrauchsrelevanten Straßeneigenschaft auf der bevorstehenden Fahrroute des Kraftfahrzeugs bestimmt wird. Diese Fahrempfehlung kann dann einem Fahrzeugführer des Fahrzeugs mitgeteilt werden. Konkret wird hier beispielsweise überprüft, ob sich auf der bevorstehenden Fahrroute des Kraftfahrzeugs eine Kuppe befindet, über die das Kraftfahrzeug fahren wird. Befindet sich das Kraftfahrzeug kurz vor einer derartigen Kuppe, wird eine Fahrempfehlung zur Verringerung der Antriebsleistung des Kraftfahrzeugs oder sogar zum antriebslosen Ausrollen des Kraftfahrzeugs ausgegeben. Hat das Kraftfahrzeug die Kuppe passiert und befindet sich das Kraftfahrzeug auf einer Gefällestrecke, wird zudem eine Fahrempfehlung zur Erhöhung der Fahrgeschwindigkeit ausgegeben.

Aus der US 2016/018821 A1 sind ein Fernsteuerungsgerät und ein Fernsteuerungssystem bekannt, welches das Fernsteuerungsgerät verwendet. Die DE 10 2011 112990 A1 offenbart eine automatische Fahrhilfe für Fahrzeuge. Aus der US 4 335 429 A ist ein Steuergerät für ein Motor/Elektro-Hybridfahrzeug bekannt. Die DE 196 48 943 A1 offenbart eine automatische Fahrsteuerungseinheit für Fahrzeuge. Aus der DE 10 2009 033752 A1 sind ein Verfahren und eine Vorrichtung zum Schalten verschiedener Funktionen bekannt. Die US 2015/375756 A1 offenbart ein Verfahren zur Bestimmung des Kollisionsrisikos von Fahrzeugen. Aus der DE 10 2012 024859 B3 ist ein Verfahren zum Bereitstellen einer Betriebsstrategie für ein Kraftfahrzeug bekannt. Die EP 2 953 110 A1 offenbart eine Bewegungssteuerungsvorrichtung und ein Bewegungssteuerungssystem.

Aufgabe der Erfindung ist es, ein Verfahren zum Betreiben eines Fahrzeugs, insbesondere eines Nutzfahrzeugs, sowie ein System zum Betreiben eines Fahrzeugs, insbesondere eines Nutzfahrzeugs, bereitzustellen, mittels denen der Fahrzeugbetrieb auf einfache und effektive Weise weiter optimiert werden kann.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird ein Verfahren zum Betreiben eines Kraftfahrzeugs, insbesondere eines Nutzfahrzeugs, vorgeschlagen, wobei das Fahrzeug eine Fahrtinformation-Ermittlungseinrichtung aufweist, mittels der zumindest die aktuelle Position bzw. GPS-Position, insbesondere zusammen mit der aktuell eingestellten Fahrroute, des fahrenden Fahrzeugs kontinuierlich bzw. fortlaufend als aktuelle Fahrtinformation ermittelt wird, wobei das Fahrzeug eine Sende- und Empfangseinrichtung aufweist, mittels der die ermittelten aktuellen Fahrtinformationen zusammen mit Fahrzeuginformationen an eine Auswertestation übermittelt werden. Mittels einer Fahrstrategie-Ermittlungseinrichtung der Auswertestation wird anhand der übermittelten Fahrtinformationen sowie anhand von in einer Speichereinrichtung der Auswertestation gespeicherten Kartendaten zunächst erfasst bzw. ermittelt, ob sich in Fahrtrichtung unmittelbar vor dem Fahrzeug eine, insbesondere einen definierten Kurvenverlauf aufweisende, Kurve befindet. Sofern mittels der Fahrstrategie-Ermittlungseinrichtung eine Kurve erfasst wird, wird mittels der Fahrstrategie-Ermittlungseinrichtung eine Fahrstrategie zum Durchfahren der Kurve ermittelt. Die ermittelte Fahrstrategie wird von der Auswertestation an die fahrzeugseitige Sende- und Empfangseinrichtung und somit an das Fahrzeug übermittelt. Die Fahrstrategie-Ermittlungseinrichtung ermittelt anhand von in der Speichereinrichtung gespeicherten Erfahrungsdaten zu wenigstens einer Durchfahrt einer Kurve mit einem identischen oder einem ähnlichen Kurvenverlauf mit dem Fahrzeug sowie anhand der übermittelten Fahrzeuginformationen eine energieverbrauchsoptimale Fahrstrategie zum Durchfahren der Kurve. Mittels der Fahrstrategie-Ermittlungseinrichtung wird anhand der in der Speichereinrichtung gespeicherten Kartendaten der Kurvenverlauf der erfassten Kurve ermittelt. Der ermittelte Kurvenverlauf wird bei der Ermittlung der energieverbrauchsoptimalen Fahrstrategie berücksichtigt.

Auf diese Weise kann der Fahrzeugbetrieb weiter optimiert werden, da mit der erfindungsgemäß ermittelten optimalen Fahrstrategie zum Durchfahren einer vorausliegenden Kurve nun der Fahrzeugbetrieb auch im Hinblick auf eine Kurven-Durchfahrt optimiert werden kann. Über die fahrzeugexterne Auswertestation, beispielsweise ein Cloud-Server, in der Erfahrungsdaten bezüglich der Durchfahrt der vorausliegenden Kurve oder einer ähnlichen Kurve gespeichert sind, kann die optimale Fahrstrategie zum Durchfahren der vorausliegenden Kurve dabei einfach und effektiv ermittelt werden (beispielsweise über sogenannte "Big Data Analysen"). Die erfindungsgemäße Verfahrensführung ist dabei besonders effektiv, da eine einzige Auswertestation von einer Vielzahl von Fahrzeugen genutzt werden kann. Dabei müssen an den Fahrzeugen keine bzw. nur geringfügige Modifikationen vorgenommen werden, um deren Kurven-Durchfahrt zu optimieren. Die Fahrzeuge können beispielsweise über eine UMTS-Datenverbindung mit der Auswertstation kommunizieren.

Die Begrifflichkeit "Durchfahren der Kurve" ist hier dabei ausdrücklich in einem weiten Sinne zu verstehen. So soll die Kurven-Durchfahrt hier auch die Anfahrt auf die Kurve mitumfassen, so dass mittels der Fahrstrategie-Ermittlungseinrichtung auch bezüglich des Anfahrens der Kurve eine optimale Fahrstrategie ermittelt wird.

Des Weiteren sind eine Vielzahl von Fahrstrategien zur Optimierung der Kurven-Durchfahrt denkbar. Sofern eine erfasste vorausliegende Kurve beispielsweise energieverbrauchsoptimal bzw. mit möglichst geringem Energieverbrauch durchfahren werden soll, kann mittels der Fahrstrategie beispielsweise eine Reduzierung der Fahrzeuggeschwindigkeit vor dem Erreichen der Kurve vorgegeben werden, um die während der Kurven-Durchfahrt wirkenden Querkräfte zu verringern. Bei einer verschleißoptimierten Fahrstrategie kann beispielsweise der Einsatz von Bremssystemen des Fahrzeugs, insbesondere auch eines Rekuperations-Bremssystems des Fahrzeugs, optimiert werden. Bei einer sicherheitsoptimierten Fahrstrategie kann beispielsweise die Geschwindigkeit, die Entschleunigung und die Beschleunigung des Fahrzeugs optimiert werden.

Grundsätzlich kann natürlich zu jeder vorausliegenden Kurve eine Fahrstrategie ermittelt und an das Fahrzeug übermittelt werden. Bevorzugt ist es jedoch, wenn nur zu vorausliegenden Kurven mit einem definierten Kurvenverlauf eine optimale Fahrstrategie zum Durchfahren der Kurve ermittelt wird, um die Effizienz der erfindungsgemäßen Verfahrensführung zu erhöhen. Die optimale Fahrstrategie kann dabei beispielsweise nur für vorausliegende Kurven ermittelt werden, deren Kurvenradius einen definierten Kurvenradius-Wert unterschreitet, so dass die Fahrstrategie nur für engere bzw. für besonders enge Kurven ermittelt wird.

In einer bevorzugten erfindungsgemäßen Verfahrensführung wird wenigstens eine Antriebskomponente des Fahrzeugs zum Einhalten der an das Fahrzeug übermittelten Fahrstrategie selbsttätig bzw. automatisch mittels eines Steuergeräts des Fahrzeugs angesteuert. So wird komfortabel und zuverlässig sichergestellt, dass das Fahrzeug gemäß der ermittelten Fahrstrategie betrieben wird. Bevorzugt ist dabei vorgesehen, dass die wenigstens eine Antriebskomponente durch eine Brennkraftmaschine des Fahrzeugs und/oder durch ein Fahrzeuggetriebe und/oder durch eine Elektromaschine des Fahrzeugs gebildet ist. Dabei kann beispielsweise bei einer energieverbrauchsoptimalen Fahrstrategie die Abschaltung von Teilen des Antriebsstrangs bei einem Bremsen oder Ausrollen des Fahrzeugs, die Betriebsweise der Brennkraftmaschine oder das Schaltverhalten des Fahrzeuggetriebes, insbesondere bei einer Fahrzeugbeschleunigung, optimiert werden.

Alternativ oder zusätzlich kann auch wenigstens ein Bremssystem des Fahrzeugs zum Einhalten der an das Fahrzeug übermittelten Fahrstrategie selbsttätig bzw. automatisch mittels eines Steuergeräts des Fahrzeugs angesteuert werden. So kann ebenfalls komfortabel und zuverlässig sichergestellt werden, dass das Fahrzeug gemäß der ermittelten Fahrstrategie betrieben wird. Bevorzugt ist dabei vorgesehen, dass das wenigstens eine Bremssystem durch ein Rekuperations-Bremssystem des Fahrzeugs gebildet ist.

Vorteilhaft ist es, wenn das Fahrzeug eine durch einen Fahrer des Fahrzeugs betätigbare Betätigungseinrichtung, insbesondere einen Taster und/oder einen Schalter aufweist, mittels der die selbsttätige bzw. automatische Ansteuerung der wenigstens einen Antriebskomponente und/oder des wenigstens einen Bremssystems deaktiviert, insbesondere deaktiviert und aktiviert, werden kann. Mittels einer derartigen Betätigungseinrichtung kann der Fahrer die selbsttätige Ansteuerung der wenigstens einen Antriebskomponente bzw. des wenigstens einen Bremssystems auf einfache Weise deaktivieren, wenn er dies nicht wünscht bzw. nicht für erforderlich hält.

In einer weiteren bevorzugten Ausgestaltung wird die an das Fahrzeug übermittelte Fahrstrategie einem Fahrer des Fahrzeugs mittels einer Anzeigeeinrichtung, insbesondere mit einem Bildschirm, angezeigt. So kann der Fahrer über die ermittelte Fahrstrategie informiert werden. Gegebenenfalls kann der Fahrer mittels dieser Anzeige auch das Fahrzeug zum Einhalten der angezeigten Fahrstrategie steuern.

Die an die Auswertestation übermittelten Fahrzeuginformationen können beispielsweise durch aktuelle Fahrzeug-Zustandsdaten gebildet, die mittels einer Zustands-Ermittlungseinrichtung des Fahrzeugs ermittelt werden. Bevorzugt ist dabei vorgesehen, dass die an die Auswertestation übermittelten Fahrzeug-Zustandsdaten durch die aktuelle Geschwindigkeit des Fahrzeugs und/oder durch den aktuell gewählten Gang eines Fahrzeuggetriebes durch die aktuell mittels einer Energie-Speichereinrichtung des Fahrzeugs gespeicherte elektrische Energiemenge und/oder durch die in einem Kraftstofftank des Fahrzeugs gespeicherte Kraftstoffmenge gebildet sind. Mittels dieser Fahrzeug-Zustandsdaten kann die optimale Fahrstrategie zum Durchfahren einer vorausliegenden Kurve auf effektive Weise ermittelt werden.

Vorzugsweise werden während des Fahrzeugbetriebs die mittels der Zustand-Ermittlungseinrichtung ermittelten aktuellen Fahrzeug-Zustandsdaten, ebenso wie auch die aktuellen Fahrtinformationen, kontinuierlich bzw. fortlaufend mittels der fahrzeugseitigen Sende- und Empfangseinrichtung an die Auswertestation übermittelt. So ist die Auswertestation stets über den aktuellen Zustand des Fahrzeugs informiert. Diese Übermittlung der aktuellen Fahrtinformationen und der aktuellen Fahrzeug-Zustandsdaten kann beispielsweise bei einem Fahrzeug-Start automatisch aktiviert werden. Alternativ kann diese Übermittlung der aktuellen Fahrtinformationen und der aktuellen Fahrzeug-Zustandsdaten aber auch erst bei einer Betätigung einer Betätigungseinrichtung, insbesondere einer Taste oder eines Schalters, durch den Fahrer Fahrzeugs aktiviert werden.

Weiter bevorzugt sind die an die Auswertestation übermittelten Fahrzeuginformationen durch die Fahrzeugart bzw. den Fahrzeugtyp und/oder den aktuellen Beladungszustand des Fahrzeugs und/oder durch die Motorisierung des Fahrzeugs gebildet. Mit diesen Fahrzeuginformationen kann eine effektive Fahrstrategie zum optimalen Durchfahren der Kurve ermittelt werden.

Vorteilhaft ist es weiter, wenn während der Durchfahrt der erfassten Kurve mittels einer Zustand-Ermittlungseinrichtung des Fahrzeugs Fahrzeug-Zustandsdaten ermittelt werden. Diese ermittelten Fahrzeug-Zustandsdaten werden dann mittels der Sende- und Empfangseinrichtung des Fahrzeugs an die Auswertestation übermittelt und dort als Erfahrungsdaten in der Speichereinrichtung der Auswertestation abgespeichert. So wird die Effektivität der erfindungsgemäßen Verfahrensführung weiter erhöht, da die an die Auswertestation übermittelten und dort als neue Erfahrungsdaten gespeicherten Fahrzeug-Zustandsdaten bei einer erneuten Durchfahrt der Kurve von einem Fahrzeug bei der Ermittlung einer optimalen Fahrstrategie zum Durchfahren der Kurve verwendet werden können. Mit der Menge an in der Speichereinrichtung gespeicherten Erfahrungsdaten steigt daher auch die Effektivität der Ermittlung einer optimalen Fahrstrategie zum Durchfahren der Kurve an.

Bevorzugt sind diese Fahrzeug-Zustandsdaten dabei durch den Geschwindigkeitsverlauf des Fahrzeugs während der Kurven-Durchfahrt und/oder den wenigstens einen gewählten Gang eines Fahrzeuggetriebes während der Kurven-Durchfahrt und/oder durch den Beschleunigungsverlauf (positive und negative Beschleunigung) des Fahrzeugs während der Kurven-Durchfahrt und/oder durch den Energieverbrauch des Fahrzeugs, insbesondere durch den Kraftstoffverbrauch des Fahrzeugs, während der Kurven-Durchfahrt gebildet. Diese Fahrzeug-Zustandsdaten stellen besonders wertvolle bzw. nützliche Erfahrungsdaten zur Ermittlung einer optimalen Fahrstrategie zum Durchfahren der Kurve dar.

Es wird mittels der Fahrstrategie-Ermittlungseinrichtung, insbesondere anhand der in der Speichereinrichtung gespeicherten Kartendaten, der Kurvenverlauf der erfassten Kurve ermittelt. Dieser ermittelte Kurvenverlauf wird dann bei der Ermittlung der optimalen Fahrstrategie berücksichtigt. So kann die Fahrstrategie zum Durchfahren der vorausliegenden Kurve einfach und effektiv ermittelt werden.

Zusätzlich können, sofern in der Speichereinrichtung der Auswertestation bereits Erfahrungsdaten zu wenigstens einer Durchfahrt der erfassten Kurve mit einem Fahrzeug, insbesondere mit einem ähnlichen Fahrzeug, gespeichert sind, diese gespeicherten Erfahrungsdaten bei der Ermittlung der optimalen Fahrstrategie berücksichtigt werden. So kann der Kurvenverlauf der erfassten Kurve besonders einfach bzw. mit besonders geringem Aufwand bei der Ermittlung der optimalen Fahrstrategie zum Durchfahren der Kurve berücksichtigt werden.

Zur Lösung der bereits genannten Aufgabe wird ferner ein System zur Durchführung eines Verfahrens nach einem der Ansprüche 1 bis 12 beansprucht.

Die sich durch das erfindungsgemäße System ergebenden Vorteile sind identisch mit den bereits gewürdigten Vorteilen der erfindungsgemäßen Verfahrensführung, so dass diese an dieser Stelle nicht wiederholt werden.

Des Weiteren wird auch ein Fahrzeug, insbesondere ein Nutzfahrzeug, durch Durchführung des erfindungsgemäßen Verfahrens beansprucht. Die sich hieraus ergebenden Vorteile sind ebenfalls identisch mit den bereits gewürdigten Vorteilen der erfindungsgemäßen Verfahrensführung und werden an dieser Stelle ebenfalls nicht wiederholt.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: eine schematische Darstellung, anhand der die erfindungsgemäße Verfahrensführung erläutert wird;
- Figur 2: eine schematische Darstellung, aus der der Aufbau eines erfindungsgemäßen Systems hervorgeht; und
- Figur 3: ein Ablaufdiagramm, anhand dem die erfindungsgemäßen Verfahrensführung erläutert wird.

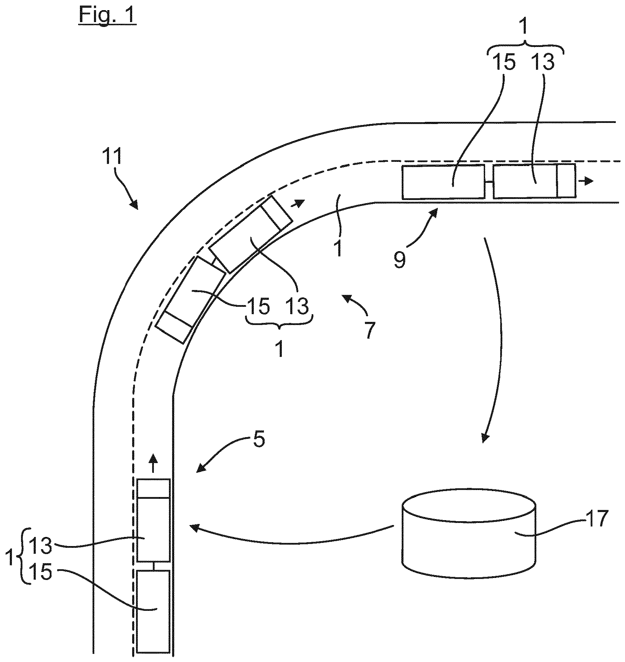

In Figur 1 ist ein auf einer Fahrbahn 1 fahrendes Fahrzeug 3 in drei Fahrsituationen 5, 7, 9 gezeigt. In einer ersten Fahrsituation 5 befindet sich das Fahrzeug 1 dabei, in Fahrtrichtung gesehen, unmittelbar vor einer Kurve 11 der Fahrbahn 1. In einer zeitlich späteren zweiten Fahrsituation 7 befindet sich das Fahrzeug 1 inmitten der Kurve 11, so dass die Kurve 11 hier von dem Fahrzeug 1 durchfahren wird. In einer zeitlich noch späteren dritten Fahrsituation 9 hat das Fahrzeug 1 die Kurve 11 durchfahren, so dass sich die Kurve 11 hier in Fahrtrichtung hinter dem Fahrzeug 1 befindet. Das Fahrzeug 1 ist hier beispielhaft durch eine Zugkombination gebildet, die sich aus einem Zugfahrzeug 13 und einem mit dem Zugfahrzeug 13 gekoppelten Anhänger 15 zusammensetzt.

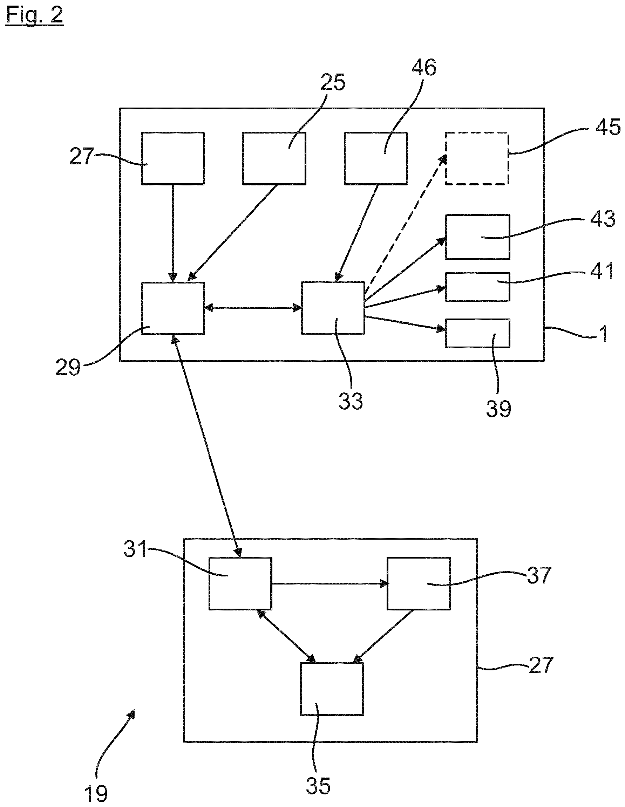

Wie in Figur 1 weiter gezeigt ist, ist das Fahrzeug 1 datenübertragend mit einer schematisch angedeuteten Auswertestation 17 verbunden. Diese Auswertestation 17 kann beispielsweise durch einen Cloud-Server gebildet sein. Das Fahrzeug 1 und die Auswertestation 17 bilden zusammen ein System 19 (Fig. 2) zum Betreiben des Fahrzeugs 1 aus. Der Aufbau dieses Systems 19 wird nachfolgend anhand von Figur 2 näher erläutert:

Wie in Figur 2 schematisch angedeutet ist, weist das Fahrzeug 1 eine Fahrtinformation-Ermittlungseinrichtung 25 auf, mittels der die aktuelle Position und die aktuelle Fahrroute des Fahrzeugs 1 als Fahrtinformationen kontinuierlich bzw. fortlaufend neu ermittelt werden. Zudem weist das Fahrzeug 1 auch eine Zustand-Ermittlungseinrichtung 27 auf, mittels der der aktuelle Zustand des Fahrzeugs ebenfalls kontinuierlich bzw. fortlaufend neu ermittelt wird. Konkret wird hier dabei die aktuelle Geschwindigkeit des Fahrzeugs 1, der aktuell gewählte Gang eines Fahrzeuggetriebes und die in einem Kraftstofftank des Fahrzeugs 1 gespeicherte Kraftstoffmenge kontinuierlich mittels der Zustand-Ermittlungseinrichtung 27 ermittelt. Die Ermittlung der aktuellen Fahrtinformationen und der aktuellen Fahrzeug-Zustandsdaten kann beispielsweise bei einem Start des Fahrzeugs 1 automatisch aktiviert werden.

Weiter sind die Fahrtinformation-Ermittlungseinrichtung 25 und die Zustand-Ermittlungseinrichtung 27 des Fahrzeugs 1 datenübertragend mit einer Sende- und Empfangseinrichtung 29 des Fahrzeugs verbunden. Mittels der Sende- und Empfangseinrichtung 29 werden die mittels der Fahrtinformation-Ermittlungseinrichtung 25 ermittelten aktuellen Fahrtinformationen und die mittels der Zustand-Ermittlungseinrichtung 27 ermittelten aktuellen Fahrzeug-Zustandsdaten kontinuierlich bzw. fortlaufend an eine datenübertragend mit fahrzeugseitigen Sende- und Empfangseinrichtung 29 verbundene Sende- und Empfangseinrichtung 31 der Auswertestation 17 übermittelt. Diese Übermittlung der aktuellen Fahrtinformationen und der aktuellen Fahrzeug-Zustandsdaten an die Auswertestation 17 kann beispielsweise bei einer Aktivierung einer Geschwindigkeits-Regelsystems bzw. eines Tempomats des Fahrzeugs 1 durch einen Fahrer des Fahrzeugs 1 aktiviert werden.

Zudem werden in einem Steuergerät 33 des Fahrzeugs 1 gespeicherte Fahrzeuginformationen ebenfalls mittels der fahrzeugseitigen Sende- und Empfangseinrichtung 29 an die Auswertestation 17 übermittelt. Diese in dem Steuergerät 33 gespeicherten Fahrzeuginformationen sind hier beispielhaft durch die Fahrzeugart, durch den aktuellen Beladungszustand des Fahrzeugs 1 und durch die Motorisierung des Fahrzeugs 1 gebildet. Diese Fahrzeuginformationen können ebenfalls bei einer Aktivierung eines Tempomats des Fahrzeugs 1 an die Auswertestation 17 übermittelt werden.

Wie aus Figur 2 weiter hervorgeht, weist die Auswertestation 17 eine datenübertragend mit der Sende- und Empfangseinrichtung 31 verbundene Fahrstrategie-Ermittlungseinrichtung 35 auf. Diese Fahrstrategie-Ermittlungseinrichtung 35 ist auch datenübertragend mit einer Speichereinrichtung 37 der Auswertestation 17 verbunden, in der Kartendaten bzw. Straßendaten gespeichert sind. Anhand der an die Auswertestation 17 übermittelten Fahrtinformationen des Fahrzeugs 1 sowie anhand der in der Speichereinrichtung 37 gespeicherten Straßendaten ermittelt die Fahrstrategie-Ermittlungseinrichtung 35 kontinuierlich bzw. fortlaufend, ob sich in Fahrtrichtung unmittelbar vor dem Fahrzeug 1 eine Kurve mit einem definierten Kurvenverlauf befindet. Wird mittels der Fahrstrategie-Ermittlungseinrichtung 35 eine derartige Kurve ermittelt bzw. erfasst, ermittelt die Fahrstrategie-Ermittlungseinrichtung 35 anhand von in der Speichereinrichtung 37 gespeicherten Erfahrungsdaten zu wenigstens einer Durchfahrt einer Kurve mit einem identischen oder einem ähnlichen Kurvenverlauf mit einem Fahrzeug, vorzugsweise mit dem gleichen oder einem ähnlichen Fahrzeug, sowie anhand der übermittelten Fahrzeuginformationen des Fahrzeugs 1 eine optimale, insbesondere eine energieverbrauchsoptimale, Fahrstrategie zum Durchfahren der Kurve.

Die ermittelte Fahrstrategie wird dann vor dem Durchfahren der Kurve mittels der Sende- und Empfangseinrichtung 31 der Auswertestation 17 an die Sende- und Empfangseinrichtung 29 und somit an das Fahrzeug 1 übermittelt. Bei dem in Figur 1 gezeigten Fahrbahnverlauf erfolgt diese Übermittlung der optimalen Fahrstrategie in der ersten Fahrsituation 5 des Fahrzeugs 1 vor der Kurve 11.

Gemäß Figur 2 wird die ermittelte Fahrstrategie dann von der fahrzeugseitigen Sende- und Empfangseinrichtung 29 an das Steuergerät 33 des Fahrzeugs 1 weitergeleitet. Mittels des Steuergeräts 33 werden hier dann selbsttätig bzw. automatisch eine Brennkraftmaschine 39 des Fahrzeugs 1, ein Getriebe 41 des Fahrzeugs 1 sowie ein Rekuperations-Bremssystem 43 des Fahrzeugs 1 angesteuert, dergestalt, dass das Fahrzeug 1 möglichst die ermittelte optimale Fahrstrategie zum Durchfahren der Kurve 11 einhält. Optional kann mit dem Steuergerät 33 zusätzlich ein mit gestrichelten Linien angedeuteter Bildschirm 45 des Fahrzeugs 1 angesteuert werden, so dass einem Fahrer des Fahrzeugs 1 die ermittelte Fahrstrategie mit dem Bildschirm 45 angezeigt wird.

Des Weiteren weist das Fahrzeug 1 hier beispielhaft auch eine durch den Fahrer des Fahrzeugs 1 betätigbare Betätigungseinrichtung 46, beispielsweise eine Taste und/oder einen Schalter auf, mittels der die selbsttätige bzw. automatische Ansteuerung der Brennkraftmaschine 39, des Getriebes 41 und des Rekuperations-Bremssystems 43 des Fahrzeugs 1 deaktiviert und aktiviert werden kann.

Nach der Kurven-Durchfahrt werden hier zudem während der Kurven-Durchfahrt mittels der Zustands-Ermittlungseinrichtung 27 ermittelte Fahrzeug-Zustandsdaten mittels der fahrzeugseitigen Sende- und Empfangseinrichtung 29 an die Auswertestation 17 übermittelt. Diese Fahrzeug-Zustandsdaten sind hier beispielhaft durch den Geschwindigkeitsverlauf des Fahrzeugs 1 während der Kurven-Durchfahrt, durch den wenigstens einen gewählten Gang des Fahrzeuggetriebes 41 während der Kurven-Durchfahrt, durch den Beschleunigungsverlauf des Fahrzeugs 1 während der Kurven-Durchfahrt und durch den Kraftstoffverbrauch des Fahrzeugs 1 während der Kurven-Durchfahrt gebildet

Die während der Kurvenfahrt ermittelten Fahrzeug-Zustandsdaten werden dann an die datenübertragend mit der Sende- und Empfangseinrichtung 31 verbundene Speichereinrichtung 37 der Auswertestation 17 weitergeleitet und dort als Erfahrungsdaten abgespeichert. Bei dem in Figur 1 gezeigten Fahrbahnverlauf erfolgt die Übermittlung der während der Kurvenfahrt ermittelten Fahrzeug-Zustandsdaten von dem Fahrzeug 1 an die Auswertestation 17 in der dritten Fahrsituation 9 des Fahrzeugs.

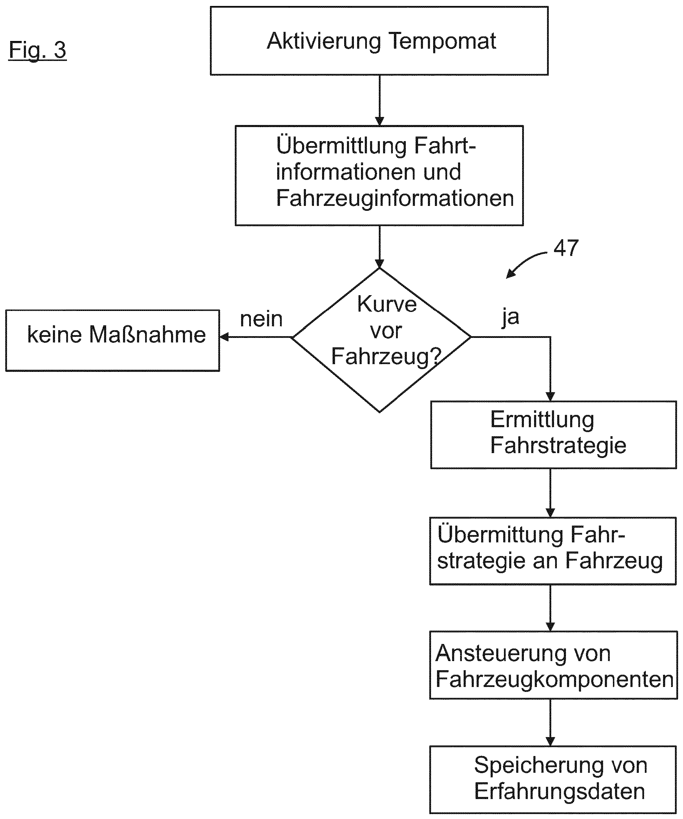

In Figur 3 ist ein Ablaufdiagramm gezeigt, anhand dem die erfindungsgemäße Verfahrensführung nochmals zusammenfassend erläutert wird:
Nach der Aktivierung des fahrzeugseitigen Tempomats werden die aktuellen Fahrtinformationen, die aktuellen Fahrzeug-Zustandsdaten als Fahrzeuginformationen und die in dem Steuergerät 33 gespeicherten Fahrzeuginformationen von dem Fahrzeug 1 an die Auswertestation 17 übermittelt. Mittels der Fahrstrategie-Ermittlungseinrichtung 35 der Auswertestation 17 wird dann gemäß der Entscheidungsraute 47 kontinuierlich ermittelt, ob sich in Fahrtrichtung vor dem Fahrzeug 1 eine Kurve mit einem definierten Kurvenverlauf befindet. Befindet sich vor dem Fahrzeug 1 eine derartige Kurve, wird eine optimale Fahrstrategie zum Durchfahren dieser Kurve ermittelt. Diese Fahrstrategie wird dann vor der Kurven-Durchfahrt von der Auswertestation 17 an das Fahrzeug 1 übermittelt. Anschließend werden dann mittels des Steuergeräts 33 Fahrzeugkomponenten, hier die Brennkraftmaschine 39, das Fahrzeuggetriebe 41 und das Rekuperations-Bremssystem 43 des Fahrzeugs 1, zum Einhalten der ermittelten Fahrstrategie angesteuert. Nach Durchfahrt der Kurve werden die während der Kurven-Durchfahrt ermittelten Fahrzeug-Zustandsdaten dann an die Auswertestation 17 übermittelt und dort als Erfahrungsdaten abgespeichert.

### Bezugszeichenliste

- 1: Fahrzeug
- 3: Fahrbahn
- 5: erste Fahrsituation
- 7: zweite Fahrsituation
- 9: dritte Fahrsituation
- 11: Kurve
- 13: Zugfahrzeug
- 15: Anhänger
- 17: Auswertestation
- 19: System
- 25: Fahrtinformation-Ermittlungseinrichtung
- 27: Zustand-Ermittlungseinrichtung
- 29: Sende- und Empfangseinrichtung
- 31: Sende- und Empfangseinrichtung
- 33: Steuergerät
- 35: Fahrstrategie-Ermittlungseinrichtung
- 37: Speichereinrichtung
- 39: Brennkraftmaschine
- 41: Getriebe
- 43: Rekuperations-Bremssystem
- 45: Bildschirm
- 46: Betätigungseinrichtung
- 47: Entscheidungsraute

## Patentansprüche

1. Verfahren zum Betreiben eines Fahrzeugs, wobei das Fahrzeug (1) eine Fahrtinformation-Ermittlungseinrichtung (25) aufweist, mittels der zumindest die aktuelle Position des fahrenden Fahrzeugs (1) als aktuelle Fahrtinformation kontinuierlich ermittelt wird,
wobei das Fahrzeug (1) eine Sende- und Empfangseinrichtung (29) aufweist, mittels der die ermittelten aktuellen Fahrtinformationen zusammen mit Fahrzeuginformationen an eine Auswertestation (17) übermittelt werden,
wobei mittels einer Fahrstrategie-Ermittlungseinrichtung (35) der Auswertestation (17) anhand der übermittelten Fahrtinformationen und anhand von in einer Speichereinrichtung (37) der Auswertestation gespeicherten Kartendaten zunächst erfasst wird, ob sich in Fahrtrichtung vor dem Fahrzeug (1) eine Kurve (11) befindet,
wobei, sofern mittels der Fahrstrategie-Ermittlungseinrichtung (35) eine Kurve (11) erfasst wird, mittels der Fahrstrategie-Ermittlungseinrichtung (35) eine Fahrstrategie zum Durchfahren der Kurve (11) ermittelt wird, und
wobei die ermittelte Fahrstrategie von der Auswertestation (17) an die fahrzeugseitige Sende- und Empfangseinrichtung (29) und somit an das Fahrzeug (1) übermittelt wird,
**dadurch gekennzeichnet, dass**
die Fahrstrategie-Ermittlungseinrichtung (35) anhand von in der Speichereinrichtung (37) gespeicherten Erfahrungsdaten zu wenigstens einer Durchfahrt einer Kurve mit einem identischen oder einem ähnlichen Kurvenverlauf mit dem Fahrzeug (1) sowie anhand der übermittelten Fahrzeuginformationen eine energieverbrauchsoptimale Fahrstrategie zum Durchfahren der Kurve ermittelt, und
dass mittels der Fahrstrategie-Ermittlungseinrichtung (35) anhand der in der Speichereinrichtung (37) gespeicherten Kartendaten der Kurvenverlauf der erfassten Kurve (11) ermittelt wird, und dass der ermittelte Kurvenverlauf bei der Ermittlung der energieverbrauchsoptimalen Fahrstrategie berücksichtigt wird.

2. Verfahren nach Anspruch 1, **dadurch gekennzeichnet, dass** wenigstens eine Antriebskomponente des Fahrzeugs (1) zum Einhalten der an das Fahrzeug (1) übermittelten Fahrstrategie selbsttätig mittels eines Steuergeräts (33) des Fahrzeugs (1) angesteuert wird, wobei bevorzugt vorgesehen ist, dass die wenigstens eine Antriebskomponente durch eine Brennkraftmaschine (39) des Fahrzeugs (1) und/oder durch eine Fahrzeuggetriebe (41) und/oder durch eine Elektromaschine des Fahrzeugs (1) gebildet ist.

3. Verfahren nach Anspruch 1 oder 2, **dadurch gekennzeichnet, dass** wenigstens ein Bremssystem des Fahrzeugs (1) zum Einhalten der an das Fahrzeug (1) übermittelten Fahrstrategie selbsttätig mittels eines Steuergeräts (33) des Fahrzeugs (1) angesteuert wird, wobei bevorzugt vorgesehen ist, dass das wenigstens eine Bremssystem durch ein Rekuperations-Bremssystem (43) des Fahrzeugs (1) gebildet ist.

4. Verfahren nach Anspruch 2 oder 3, **dadurch gekennzeichnet, dass** das Fahrzeug (1) eine durch einen Fahrer des Fahrzeugs betätigbare Betätigungseinrichtung (46), insbesondere eine Taste und/oder einen Schalter, aufweist, mittels der die selbsttätige Ansteuerung der wenigstens einen Antriebskomponente und/oder des wenigstens einen Bremssystems deaktivierbar, insbesondere deaktivierbar und aktivierbar, ist.

5. Verfahren nach einem der vorhergehenden Ansprüche, **dadurch gekennzeichnet, dass** die an das Fahrzeug (1) übermittelte Fahrstrategie einem Fahrer des Fahrzeugs (1) mittels einer Anzeigeeinrichtung (45), insbesondere mit einem Bildschirm, angezeigt wird.

6. Verfahren nach einem der vorhergehenden Ansprüche, **dadurch gekennzeichnet, dass** die an die Auswertestation (17) übermittelten Fahrzeuginformationen durch aktuelle Fahrzeug-Zustandsdaten gebildet sind, die mittels einer Zustand-Ermittlungseinrichtung (27) des Fahrzeugs ermittelt werden.

7. Verfahren nach Anspruch 6, **dadurch gekennzeichnet, dass** die übermittelten aktuellen Fahrzeug-Zustandsdaten durch die aktuelle Geschwindigkeit des Fahrzeugs (1) und/oder den aktuell gewählten Gang eines Fahrzeuggetriebes (41) und/oder durch die aktuell mittels einer Energie-Speichereinrichtung des Fahrzeug (1) gespeicherte elektrische Energiemenge und/oder durch die in einem Kraftstofftank des Fahrzeugs (1) gespeicherte Kraftstoffmenge gebildet sind.

8. Verfahren nach Anspruch 6 oder 7, **dadurch gekennzeichnet, dass** während des Fahrzeugbetriebs die ermittelten aktuellen Fahrzeug-Zustandsdaten kontinuierlich mittels der fahrzeugseitigen Sende- und Empfangseinrichtung (29) an die Auswertestation (17) übermittelt werden.

9. Verfahren nach einem der vorhergehenden Ansprüche, **dadurch gekennzeichnet, dass** die an die Auswertestation (17) übermittelten Fahrzeuginformationen durch die Fahrzeugart und/oder durch den aktuellen Beladungszustand des Fahrzeugs (1) und/oder durch die Motorisierung des Fahrzeugs (1) gebildet sind.

10. Verfahren nach einem der vorhergehenden Ansprüche, **dadurch gekennzeichnet, dass** während der Durchfahrt der erfassten Kurve (11) mittels einer Zustand-Ermittlungseinrichtung (27) des Fahrzeugs (1) aktuelle Fahrzeug-Zustandsdaten ermittelt werden, und dass die ermittelten Fahrzeugzustandsdaten mittels der Sende- und Empfangseinrichtung (29) an die Auswertestation (17) übermittelt und dort als Erfahrungsdaten in der Speichereinrichtung (37) der Auswertestation (17) abgespeichert werden.

11. Verfahren nach Anspruch 10, **dadurch gekennzeichnet, dass** die Fahrzeug-Zustandsdaten durch den Geschwindigkeitsverlauf des Fahrzeugs (1) und/oder durch den wenigstens einen gewählten Gang eines Fahrzeuggetriebes (41) und/oder durch den Beschleunigungsverlauf des Fahrzeugs (1) und/oder durch den Energieverbrauch des Fahrzeugs (1), insbesondere durch den Kraftstoffverbrauch des Fahrzeugs (1), während der Kurven-Durchfahrt gebildet sind.

12. Verfahren nach einem der vorhergehenden Ansprüche, **dadurch gekennzeichnet, dass**, sofern in der Speichereinrichtung (37) der Auswertestation (17) bereits Erfahrungsdaten zu wenigstens einer Durchfahrt der erfassten Kurve (11) mit einem ähnlichen Fahrzeug gespeichert sind, diese gespeicherten Erfahrungsdaten bei der Ermittlung der optimalen Fahrstrategie berücksichtigt werden.

13. System zur Durchführung eines Verfahrens nach einem der vorhergehenden Ansprüche.

14. Fahrzeug, insbesondere Nutzfahrzeug, zur Durchführung eines Verfahrens nach einem der Ansprüche 1 bis 12.

## Claims

1. Method for operating a vehicle, wherein the vehicle (1) has a trip information determination device (25) that is used to continuously determine at least the current position of the moving vehicle (1) as current trip information,
wherein the vehicle (1) has a transmitting and receiving device (29) that is used to transmit the determined current trip information, together with vehicle information, to an evaluation station (17),
wherein a driving strategy determination device (35) of the evaluation station (17) is initially used to detect whether there is a bend (11) ahead of the vehicle (1) in the direction of travel on the basis of the transmitted trip information and on the basis of map data stored in a storage device (37) of the evaluation station,
wherein, if a bend (11) is detected by means of the driving strategy determination device (35), the driving strategy determination device (35) is used to determine a driving strategy for driving through the bend (11), and
wherein the determined driving strategy is transmitted from the evaluation station (17) to the on-board transmitting and receiving device (29) and therefore to the vehicle (1),
**characterized in that**
the driving strategy determination device (35) determines an energy-consumption-optimum driving strategy for driving through the bend on the basis of experience data, stored in the storage device (37), for at least driving through a bend with an identical or similar bend profile with the vehicle (1) and on the basis of the transmitted vehicle information, and
**in that** the driving strategy determination device (35) is used to determine the bend profile of the detected bend (11) on the basis of the map data stored in the storage device (37), and **in that** the determined bend profile is taken into account when determining the energy-consumption-optimum driving strategy.

2. Method according to Claim 1, **characterized in that**, in order to comply with the driving strategy transmitted to the vehicle (1), at least one drive component of the vehicle (1) is automatically controlled by means of a control unit (33) of the vehicle (1), wherein provision is preferably made for the at least one drive component to be formed by an internal combustion engine (39) of the vehicle (1) and/or by a vehicle transmission (41) and/or by an electric machine of the vehicle (1).

3. Method according to Claim 1 or 2, **characterized in that**, in order to comply with the driving strategy transmitted to the vehicle (1), at least one braking system of the vehicle (1) is automatically controlled by means of a control unit (33) of the vehicle (1), wherein provision is preferably made for the at least one braking system to be formed by a regenerative braking system (43) of the vehicle (1).

4. Method according to Claim 2 or 3, **characterized in that** the vehicle (1) has an actuation device (46), in particular a button and/or a switch, that can be actuated by a driver of the vehicle and can be used to deactivate, in particular deactivate and activate, the automatic control of the at least one drive component and/or of the at least one braking system.

5. Method according to one of the preceding claims, **characterized in that** the driving strategy transmitted to the vehicle (1) is displayed to a driver of the vehicle (1) by means of a display device (45), in particular with a screen.

6. Method according to one of the preceding claims, **characterized in that** the vehicle information transmitted to the evaluation station (17) is formed by current vehicle state data that are determined by means of a state determination device (27) of the vehicle.

7. Method according to Claim 6, **characterized in that** the transmitted current vehicle state data are formed by the current speed of the vehicle (1) and/or the currently selected gear of a vehicle transmission (41) and/or by the amount of electrical energy currently stored by means of an energy storage device of the vehicle (1) and/or by the amount of fuel stored in a fuel tank of the vehicle (1).

8. Method according to Claim 6 or 7, **characterized in that**, during vehicle operation, the determined current vehicle state data are continuously transmitted to the evaluation station (17) by means of the on-board transmitting and receiving device (29).

9. Method according to one of the preceding claims, **characterized in that** the vehicle information transmitted to the evaluation station (17) is formed by the type of vehicle and/or by the current loading state of the vehicle (1) and/or by the motorization of the vehicle (1).

10. Method according to one of the preceding claims, **characterized in that**, while driving through the detected bend (11), current vehicle state data are determined by means of a state determination device (27) of the vehicle (1), and **in that** the determined vehicle state data are transmitted by means of the transmitting and receiving device (29) to the evaluation station (17) and are stored there as experience data in the storage device (37) of the evaluation station (17).

11. Method according to Claim 10, **characterized in that** the vehicle state data are formed by the speed profile of the vehicle (1) and/or by the at least one selected gear of a vehicle transmission (41) and/or by the acceleration profile of the vehicle (1) and/or by the energy consumption of the vehicle (1), in particular by the fuel consumption of the vehicle (1), when driving through the bend.

12. Method according to one of the preceding claims, **characterized in that**, if the storage device (37) of the evaluation station (17) already stores experience data relating to at least a drive through the detected bend (11) with a similar vehicle, these stored experience data are taken into account when determining the optimum driving strategy.

13. System for carrying out a method according to one of the preceding claims.

14. Vehicle, in particular commercial vehicle, for carrying out a method according to one of Claims 1 to 12.

## Revendications

1. Procédé permettant de faire fonctionner un véhicule, dans lequel le véhicule (1) présente un dispositif de détermination d'informations de trajet (25) au moyen duquel au moins la position actuelle du véhicule (1) en mouvement est déterminée en continu comme une information de trajet actuelle,
dans lequel le véhicule (1) présente un dispositif d'émission et de réception (29) au moyen duquel les informations de trajet actuelles déterminées sont transmises conjointement avec des informations de véhicule à un poste d'évaluation (17),
dans lequel un dispositif de détermination de stratégie de conduite (35) du poste d'évaluation (17) détecte d'abord à l'aide des informations de trajet transmises et à l'aide de données cartographiques stockées dans un dispositif de stockage (37) du poste d'évaluation si un virage (11) se trouve devant le véhicule (1) dans le sens de la marche,
dans lequel, dans la mesure où le dispositif de détermination de stratégie de conduite (35) détecte un virage (11), le dispositif de détermination de stratégie de conduite (35) détermine une stratégie de conduite pour le passage du virage (11), et
dans lequel la stratégie de conduite déterminée est transmise par le poste d'évaluation (17) au dispositif d'émission et de réception (29) côté véhicule et donc au véhicule (1),
**caractérisé en ce qu'**à l'aide de données empiriques stockées dans le dispositif de stockage (37) pour au moins un passage d'un virage ayant un tracé de virage identique ou similaire avec le véhicule (1) ainsi qu'à l'aide des informations de véhicule transmises, le dispositif de détermination de stratégie de conduite (35) détermine une stratégie de conduite optimale en consommation d'énergie pour le passage du virage, et
**en ce que** le dispositif de détermination de stratégie de conduite (35) détermine à l'aide des données cartographiques stockées dans le dispositif de stockage (37) le tracé de virage du virage (11) détecté, et **en ce que** le tracé de virage déterminé est pris en compte lors de la détermination de la stratégie de conduite optimale en consommation d'énergie.

2. Procédé selon la revendication 1, **caractérisé en ce qu'**au moins un composant d'entraînement du véhicule (1) est piloté automatiquement au moyen d'un appareil de commande (33) du véhicule (1) pour respecter la stratégie de conduite transmise au véhicule (1), dans lequel il est prévu de préférence que ledit au moins un composant d'entraînement soit formé par un moteur à combustion interne (39) du véhicule (1) et/ou par une transmission de véhicule (41) et/ou par une machine électrique du véhicule (1).

3. Procédé selon la revendication 1 ou 2, **caractérisé en ce qu'**au moins un système de freinage du véhicule (1) est piloté automatiquement au moyen d'un appareil de commande (33) du véhicule (1) pour respecter la stratégie de conduite transmise au véhicule (1), dans lequel il est prévu de préférence que ledit au moins un système de freinage soit formé par un système de freinage à récupération (43) du véhicule (1).

4. Procédé selon la revendication 2 ou 3, **caractérisé en ce que** le véhicule (1) présente un dispositif d'actionnement (46) pouvant être actionné par un conducteur du véhicule, en particulier un bouton et/ou un commutateur, au moyen duquel le pilotage automatique dudit au moins un composant d'entraînement et/ou dudit au moins un système de freinage peut être désactivé, pouvant en particulier être désactivé et activé.

5. Procédé selon l'une quelconque des revendications précédentes, **caractérisé en ce que** la stratégie de conduite transmise au véhicule (1) est affichée pour un conducteur du véhicule (1) au moyen d'un dispositif d'affichage (45), en particulier par un écran.

6. Procédé selon l'une quelconque des revendications précédentes, **caractérisé en ce que** les informations de véhicule transmises au poste d'évaluation (17) sont formées par des données d'état du véhicule qui sont déterminées au moyen d'un dispositif de détermination d'état (27) du véhicule.

7. Procédé selon la revendication 6, **caractérisé en ce que** les données d'état du véhicule actuelles transmises sont formées par la vitesse actuelle du véhicule (1) et/ou le rapport sélectionné actuellement d'une transmission de véhicule (41) et/ou par la quantité d'énergie électrique accumulée actuellement au moyen d'un dispositif d'accumulation d'énergie du véhicule (1) et/ou par la quantité de carburant stockée dans un réservoir de carburant du véhicule (1).

8. Procédé selon la revendication 6 ou 7, **caractérisé en ce que** pendant le fonctionnement du véhicule, les données d'état du véhicule actuelles déterminées sont transmises en continu au poste d'évaluation (17) au moyen du dispositif d'émission et de réception (29) côté véhicule.

9. Procédé selon l'une quelconque des revendications précédentes, **caractérisé en ce que** les informations de véhicule transmises au poste d'évaluation (17) sont formées par le type de véhicule et/ou par l'état de chargement actuel du véhicule (1) et/ou par la motorisation du véhicule (1).

10. Procédé selon l'une quelconque des revendications précédentes, **caractérisé en ce que** pendant le passage du virage (11) détecté, le dispositif de détermination d'état (27) du véhicule (1) détermine des données d'état du véhicule actuelles, et **en ce que** les données d'état du véhicule déterminées sont transmises au moyen du dispositif d'émission et de réception (29) au poste d'évaluation (17) et y sont stockées en tant que données empiriques dans le dispositif de stockage (37) du poste d'évaluation (17).

11. Procédé selon la revendication 10, **caractérisé en ce que** les données d'état du véhicule sont formées par la courbe de vitesse du véhicule (1) et/ou par ledit au moins un rapport sélectionné d'une transmission de véhicule (41) et/ou par la courbe d'accélération du véhicule (1) et/ou par la consommation d'énergie du véhicule (1), en particulier par la consommation de carburant du véhicule (1), pendant le passage d'un virage.

12. Procédé selon l'une quelconque des revendications précédentes, **caractérisé en ce que**, dans la mesure où des données empiriques pour au moins un passage du virage (11) détecté avec un véhicule similaire sont stockées dans le dispositif de stockage (37) du poste d'évaluation (17), ces données empiriques stockées sont prises en compte lors de la détermination de la stratégie de conduite optimale.

13. Système permettant d'exécuter un procédé selon l'une quelconque des revendications précédentes.

14. Véhicule, en particulier véhicule utilitaire, permettant d'exécuter un procédé selon l'une quelconque des revendications 1 à 12.
